# EUROPÄISCHE PATENTSCHRIFT

(11) **EP 3 457 533 B1**
(45) Veröffentlichungstag und Bekanntmachung des Hinweises auf die Patenterteilung: **01.07.2020**
(21) Anmeldenummer: 18189916.2
(22) Anmeldetag: 21.08.2018
(51) Int. Cl.: H02K 1/27, H02K 29/03

(54) **ROTOR EINER ELEKTRISCHEN MASCHINE**
ROTOR FOR AN ELECTRICAL MACHINE
ROTOR POUR UNE MACHINE ÉLECTRIQUE

(30) Priorität: 13.09.2017 DE 102017216164
(43) Veröffentlichungstag der Anmeldung: 20.03.2019
(73) Patentinhaber: Robert Bosch GmbH, 70442 Stuttgart (DE)
(72) Erfinder: Schock, Wolfram, 72770 Ohmenhausen (DE); Reutlinger, Kurt, 70174 Stuttgart (DE)

(56) Entgegenhaltungen:
- EP-A1- 1 420 500
- EP-A1- 2 348 611
- DE-A1-102006 026 402
- DE-A1-102009 019 555
- JP-A- H05 137 304
- US-A1- 2015 270 752

## Beschreibung

Die vorliegende Erfindung betrifft einen Rotor einer elektrischen Maschine sowie eine elektrische Maschine mit dem Rotor.

Aus dem Stand der Technik sind unterschiedliche elektrische Maschinen bekannt, die je nach Bauart ein großes Rastmoment und eine große Momentenwelligkeit aufweisen können. Um diesen negativen Eigenschaften entgegenzuwirken, weisen die Statoren bekannter elektrischer Maschinen teilweise Bruchlochwicklungen auf, bei denen die Anzahl der Nuten pro Pol und Phase keine ganze Zahl ist.

Die Schrift JP H05 137304 A offenbart einen Synchronmotor mit einem reduzierten Rastmoment. Ein Rotor des Synchronmotors weist eine Vielzahl an Permanentmagneten auf, welche um die Abtriebswelle herum angeordnet sind, wobei der Rotor zwei unterschiedliche Typen von Permanentmagneten umfasst.

Für einen Fachmann ergibt sich die objektive technische Aufgabe, das Rastmoment zu reduzieren ohne Querkräfte zu erzeugen.

### Offenbarung der Erfindung

Die vorstehende Aufgabe wird gemäß der unabhängigen Ansprüche 1 und 5 gelöst.

Der erfindungsgemäße Rotor kann mit Statoren mit Ganzlochwicklung verwendet werden und weist hierzu mehrere gleiche Polgruppen auf, wobei sich in jeder Polgruppe zumindest zwei Pole befinden und sich die Polgruppe entlang des Umfangs zumindest einmal wiederholt. Zumindest zwei Pole in der Polgruppe sind unterschiedlich ausgebildet, sodass nicht sämtliche Pole des Rotors gleichzeitig und gleichförmig auf einen Zahn des Stators auflaufen. Dadurch wird vermieden, dass sich die Rastmomente aller Pole addieren, wodurch sich das Rastmoment und die Momentenwelligkeit der elektrischen Maschine reduzieren. Durch die Wiederholung der Polgruppe ergibt sich ein gleichmäßiger Aufbau des Rotors, wodurch Querkräfte am Rotor vermieden werden. Dies wird erreicht durch den erfindungsgemäßen Rotor einer elektrischen Maschine. Die elektrische Maschine kann als Elektromotor oder Generator betrieben werden. Der Rotor weist eine mittige Drehachse auf. Beim Einsatz des Rotors im Stator dreht sich der Rotor gegenüber dem Stator um diese Drehachse. Um die Drehachse herum ist die Umfangsrichtung definiert. Senkrecht zur Drehachse steht die Radialrichtung. Der Rotor umfasst einen ferromagnetischen Träger. Der Träger wird insbesondere durch mehrere gestapelte Bleche gebildet. In dem Träger befindet sich eine Vielzahl an Magneten. Bei den Magneten handelt es sich insbesondere um Permanentmagneten. Die Magnete sind im Träger speichenförmig angeordnet, d. h., dass die Magnete in Umfangsrichtung ausgerichtet sind, sodass gleichgerichtete Magnetpole (Nordpol bzw. Südpol) der Magnete einander zugewandt sind. Die imaginäre Trennebene zwischen den beiden Magnetpolen eines Magneten erstreckt sich somit vorzugsweise parallel zur Radialrichtung und parallel zur Drehachse. Jeweils zwei einander zugewandte Magnetpole zweier benachbarter Magnete und der dazwischenliegende Anteil des Trägers bilden einen Pol (auch: Rotorpol) des Rotors. Zumindest zwei nebeneinanderliegende Pole bilden eine Polgruppe. Jede Polgruppe ist hinsichtlich der Ausgestaltung ihrer Pole gleich. Die Polgruppe wiederholt sich zumindest einmal entlang der Umfangsrichtung, sodass der Rotor zumindest zwei Polgruppen aufweist. Die Polgruppe wiederholt sich vollständig, sodass der Rotor eine ganze Zahl an Polgruppen aufweist. Innerhalb der Polgruppe unterscheiden sich zumindest zwei Pole voneinander, insbesondere so, dass sich die Rastmomente nicht aller Pole addieren und/oder insbesondere so, dass nicht sämtliche Pole des Rotors gleichzeitig und/oder mit gleicher magnetischer Wirkung auf einen Zahn des Stators auflaufen.

Die Unteransprüche zeigen bevorzugte Weiterbildungen der Erfindung.

Wie bereits beschrieben, ist jede Polgruppe gleich ausgebildet und hat somit die gleiche Abfolge an unterschiedlichen Polen. Insbesondere gilt p=g^{∗}n mit der Gesamtanzahl p der Pole, Anzahl g der Gruppen und Anzahl n der Pole pro Gruppe mit g={1; 2; 3; ...} und n={1; 2; 3; ...}.

Besonders bevorzugt weist der Rotor zumindest zwölf Pole und zumindest zwei, vorzugsweise zumindest vier, Polgruppen auf.

Bei der speichenförmigen Anordnung der Magnete erstrecken sich die einzelnen Magnete vorzugsweise in Radialrichtung wesentlich länger als in Umfangsrichtung. Insbesondere sind an der größten Stelle des Rotors ein Rotorradius und ein Rotorumfang definiert. Eine Magnetbreite des einzelnen Magnets, gemessen in Umfangsrichtung, beträgt vorzugsweise maximal 0,5^{∗}Rotorumfang/p mit der Gesamtanzahl p der Pole, besonders vorzugsweise maximal 0,3^{∗}Rotorumfang/p. Ferner ist vorzugsweise vorgesehen, dass eine Magnetlänge des einzelnen Magnets, gemessen in Radialrichtung, mindestens 0,2^{∗}Rotorradius, weiter vorzugsweise mindestens 0,3^{∗}Rotorradius, besonders vorzugsweise mindestens 0,4^{∗}Rotorradius, beträgt.

Im Folgenden werden unterschiedliche Varianten beschrieben, durch die es möglich ist, dass sich die Pole einer Polgruppe voneinander unterscheiden. Diese unterschiedlichen Varianten können miteinander kombiniert werden, da sowohl ein einzelner Pol mehrere der Unterscheidungsmerkmale aufweisen kann und da die Unterscheidungsmerkmale an unterschiedlichen Polen einer Polgruppe angewendet werden können.

Es ist vorgesehen, dass zumindest zwei Pole in der Polgruppe sich in ihrer Polteilung voneinander unterscheiden, wodurch nicht sämtliche Pole des Rotors gleichzeitig auf einen Zahn des Stators auflaufen. Die Polteilung wird im Rahmen vorliegender Technologie im Gradmaß in einer zur Drehachse senkrechten Ebene beschrieben. Alternativ kann die Polteilung auch als Polbreite, gemessen in Umfangsrichtung, bezeichnet werden.

Besonders bevorzugt ist vorgesehen, dass der Unterschied in der Polteilung zweier Pole in der Polgruppe zumindest k^{∗}(360/p^{∗}90) beträgt, mit Anzahl p aller Pole des Rotors und k=1, vorzugsweise k=2, weiter vorzugsweise k=4, besonders vorzugsweise k=10.

Ferner ist vorgesehen, dass zumindest zwei Pole der Polgruppe unterschiedliche Geometrien ihrer Polaußenseiten aufweisen, wodurch nicht sämtliche Pole des Rotors mit gleicher magnetischer Wirkung auf einen Zahn des Stators auflaufen. Die Polaußenseite weist in Radialrichtung nach außen und steht dem außenliegenden Stator gegenüber. Die Polaußenseite des einzelnen Pols ist durch den entsprechenden Anteil des Trägers und gegebenenfalls die radial nach außen weisende Seite des Magneten gebildet, wenn der Magnet mit seiner radial nach außen weisenden Seite zumindest teilweise freiliegt. Diese geometrisch unterschiedliche Gestaltung der Polaußenseite kann beispielsweise durch folgende Merkmale erreicht werden, wobei sich die beschriebenen Geometrien insbesondere auf eine Gestaltung des Querschnitts in einer zur Drehachse senkrechte Ebene beziehen:
So ist vorzugsweise vorgesehen, dass innerhalb der Polgruppe eine erste Polaußenseite eines ersten Pols konkav ausgebildet ist und eine zweite Polaußenseite eines zweiten Pols nicht-konkav oder mit einem größeren Radius als die erste Polaußenseite konkav ausgebildet ist. Die "nicht-konkave" Ausgestaltung beschreibt eine konvexe oder gerade Ausgestaltung.

Ferner ist bevorzugt vorgesehen, dass innerhalb der Polgruppe eine erste Polaußenseite eines ersten Pols konvex ausgebildet ist und eine zweite Polaußenseite eines zweiten Pols nicht-konvex oder mit einem größeren Radius als die erste Polaußenseite konvex ausgebildet ist. Die "nicht-konvexe" Ausgestaltung beschreibt eine konkave oder gerade Ausgestaltung.

Die konkaven bzw. konvexen Außenseiten müssen keine exakten Kreisabschnitte bilden und die Radien können entlang der jeweiligen Außenseite variieren.

Des Weiteren kann der Träger die radiale Außenseite des Magneten teilweise oder vollständig überdecken. Die einzelnen Magneten des Rotors können eine unterschiedliche Überdeckung aufweisen, sodass bei entsprechender Ausgestaltung der Überdeckung sich die Geometrie der Polaußenseite ändert.

Gemäß einer bevorzugten Ausgestaltung ist vorgesehen, dass alle Magnete des Rotors baugleich sind. Alternativ hierzu ist bevorzugt vorgesehen, dass zumindest zwei Pole der Polgruppe Magnete mit unterschiedlicher magnetischer Feldstärke und/oder unterschiedlicher magnetischer Flussdichte und/oder unterschiedlichem Volumen und/oder unterschiedlicher Breite aufweisen.

Die Erfindung umfasst ferner eine elektrische Maschine umfassend einen der beschriebenen Rotoren und einen Stator. Der Rotor ist im Stator um die Drehachse drehbeweglich angeordnet. Der Stator weist vorzugsweise eine Vielzahl an gleichen und gleichmäßig angeordneten Nuten mit dazwischenliegenden Zähnen auf.

Besonders bevorzugt weist der Stator eine Ganzlochwicklung auf. Bei dieser Ganzlochwicklung ist die Anzahl der Nuten je Pol und Phase eine ganze Zahl. Des Weiteren ist bevorzugt vorgesehen, dass der Stator eine Steckwicklung aufweist. Insbesondere ist die Steckwicklung als Ganzlochwicklung ausgebildet. Bei der Steckwicklung werden die Leiter (Drähte) des Stators nicht gewickelt sondern in entsprechende Löcher des Stators geschoben. Besonderer Vorteil solcher Steckwicklungen ist ein sehr hoher Kupferfüllfaktor in der Nut und damit eine große Ausnutzung und/oder besserer Wirkungsgrad der Maschine. Besonders vorteilhalft lassen sich solche Wicklungen als Ganzlochwicklungen realisieren. Dagegen ergeben sich bei Bruchlochwicklungen Probleme, da die Symmetrie der Wicklung gestört ist und die Herstellung erschwert. Die Lochzahl q errechnet sich aus der Gesamtzahl der Nuten oder Zähne dividiert durch die Gesamtzahl der Pole und der Phasenzahl. Siehe hierzu z.B.: DE10315361A1; US6198190B1; DE60116944T2; DE69904671T2; US7649294B1

### Kurze Beschreibung der Zeichnungen

Nachfolgend werden Beispiele unter Bezugnahme auf die begleitende Zeichnung im Detail beschrieben. In der Zeichnung ist:
- Figur 1: eine schematische Ansicht einer elektrischen Maschine gemäß einem ersten Beispiel,
- Figur 2: eine Detailansicht zu Figur 1,
- Figur 3: eine schematische Ansicht einer elektrischen Maschine gemäß einem zweiten Beispiel,
- Figur 4: eine Detailansicht zu Figur 3,
- Figur 5: eine schematische Ansicht einer elektrischen Maschine gemäß einem dritten Beispiel,
- Figur 6: eine Detailansicht zu Figur 5,

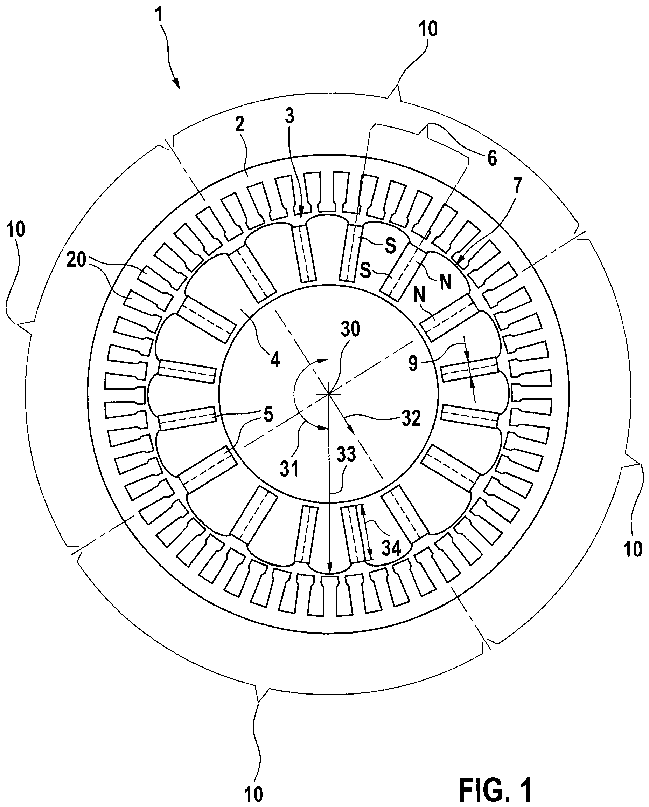

Beispiele, die für das Verständnis der Erfindung nützlich sind Anhand der Figuren 1 bis 6 wird eine elektrische Maschine 1 mit Stator 2 und Rotor 3 gemäß mehrerer Beispiele beschrieben. Gleiche bzw. funktional gleiche Bauteile sind in allen Beispielen mit denselben Bezugszeichen versehen. Die Figuren zeigen die elektrische Maschine 1 schematisch vereinfacht. Der Übersichtlichkeit halber sind beispielsweise die Wicklungen am Stator 2 ausgeblendet.

Figuren 1, 3 und 5 zeigen den Stator 2 mit darin angeordnetem Rotor 3. Der Rotor 3 ist um eine Drehachse 30 drehbar im Stator 2 angeordnet. Um die Drehachse 30 ist eine Umfangsrichtung 31 definiert. Senkrecht auf die Drehachse 30 steht eine Radialrichtung 32. Der Rotor 3 erstreckt sich entlang der Radialrichtung 32 mit einem Rotorradius 33.

Der Rotor 3 umfasst einen Träger 4, gebildet durch ein Blechpaket. Der Träger 4 weist Aussparungen auf, in denen jeweils ein Magnet 5 sitzt. Die Magnete 5 sind als Permanentmagnete ausgebildet und speichenförmig angeordnet. Insbesondere sind die Aussparungen im Träger 4 so ausgebildet, dass die Magnete 5 parallel zur Drehachse 30 eingeschoben werden können.

Die Magnete 5 erstrecken sich entlang der Radialrichtung 32 über eine Magnetlänge 34. In Umfangsrichtung 31 gemessen weisen die Magnete 5 eine Magnetbreite 9 auf. Die Magnetlänge 34 ist wesentlich größer als die Magnetbreite 9.

Die Magnetpole N, S der Magnete 5 sind in Umfangsrichtung 31 ausgerichtet. Dabei sind die Magnete 5 wechselseitig angeordnet, sodass abwechselnd zwei Südpole S und zwei Nordpole N zueinander gerichtet sind.

Zwei gleiche Magnetpole zweier benachbarter Magnete 5 und der dazwischen liegende Anteil des Trägers 4 bilden jeweils einen Pol 6 des Rotors 3. Die gezeigten Beispiele zweigen 16 Magnete 5 und entsprechend 16 Pole 6. Der Stator 2 weist 48 Nuten 20 bzw. 48 Zähne auf, da die elektrische Maschine 1 für einen Dreiphasenbetrieb ausgebildet ist, wobei gilt Lochzahl q = 48Nuten/(3Phasen^{∗}16Pole) =1.

Die in Radialrichtung 32 nach außen weisende Seite eines jeden Pols 6 wird als Polaußenseite 7 bezeichnet. Die Polaußenseite 7 ist gebildet durch die nach außen weisende Seite des Trägers 4 und die freiliegenden Anteile der nach außen weisenden Seiten der Magnete 5. Die nach außen weisenden Seiten der Magnete 5 sind teilweise mit einer Überdeckung 11 vom Träger 4 überdeckt.

Die Figuren zeigen ferner eine Polteilung α. Die Summe aller Polteilungen α summiert sich auf 360°.

Der Rotor 3 weist vier Polgruppen 10 auf. Jede Polgruppe 10 ist gleich und umfasst vier Pole 6. Jede Polgruppe erstreckt sich in den gezeigten Beispielen über 90°.

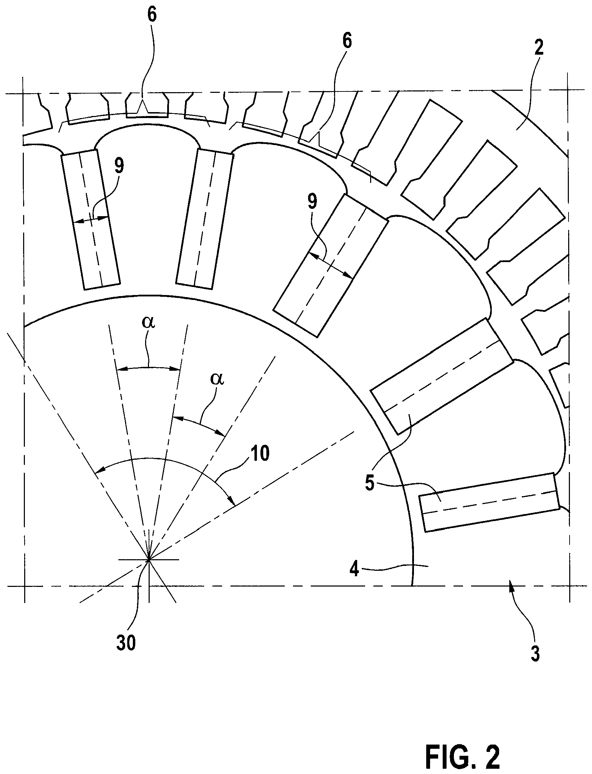

Im ersten Beispiel gemäß den Figuren 1 und 2 unterscheiden sich die Pole 6 der Polgruppe 10 in ihrem Polwinkel α.

Die Detaildarstellung in Figur 2 zeigt, dass gegebenenfalls Magnete 5 mit unterschiedlichen Magnetbreiten 9 verwendet werden können. Dies ist jedoch nur eine mögliche Ausgestaltung. Vorzugsweise werden nur baugleiche Magnete 5 verwendet.

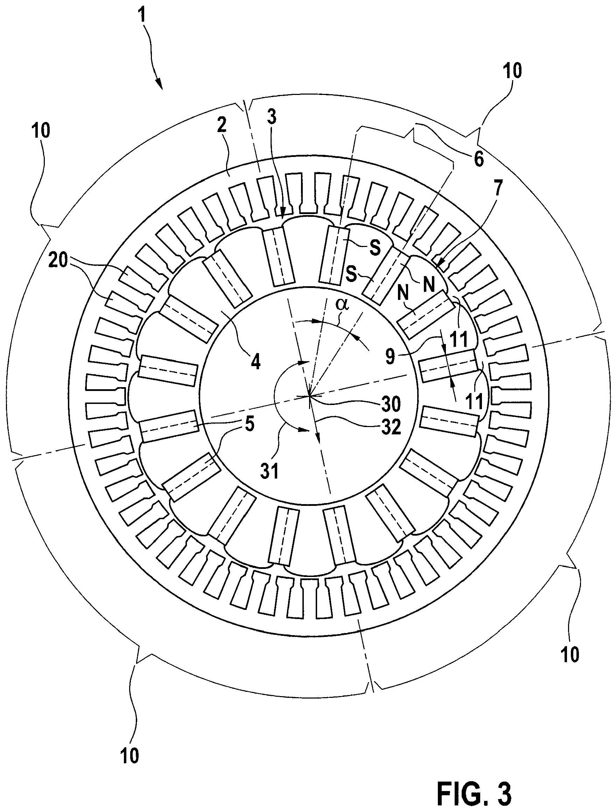

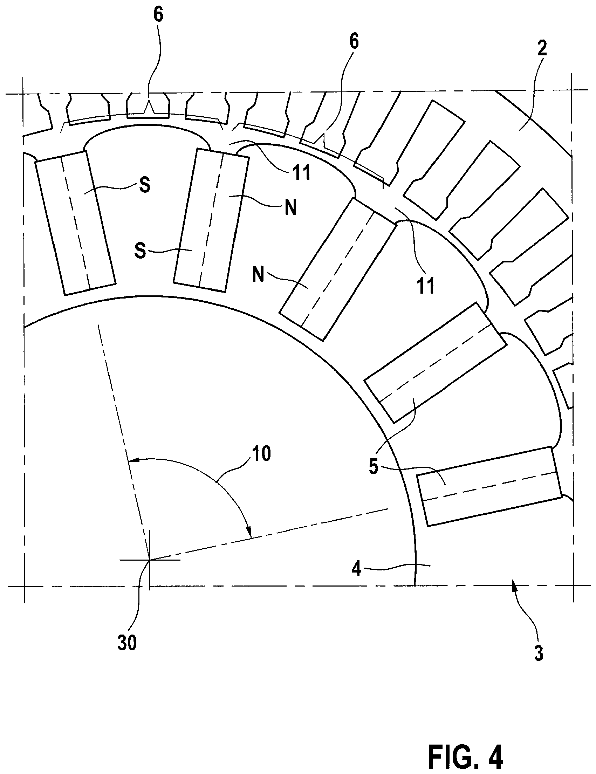

Im zweiten Beispiel gemäß den Figuren 3 und 4 unterscheiden sich die Pole 6 der Polgruppe 10 in der geometrischen Ausgestaltung der Überdeckung 11. Betrachtet man bei Figur 4 die Pole 6 entlang der Umfangsrichtung 31 im Uhrzeigersinn, so weist der erste Pol 6 am Magnetpol seines ersten Magneten 5 eine geringe Überdeckung 11 und am Magnetpol seines zweiten Magneten 5 eine größere Überdeckung 11 auf. Für den zweiten Pol 6 ergibt sich die umgekehrte Anordnung, nämlich eine größere Überdeckung 11 am Magnetpol des ersten Magneten 5 und eine geringere Überdeckung 11 am Magnetpol des zweiten Magneten 5.

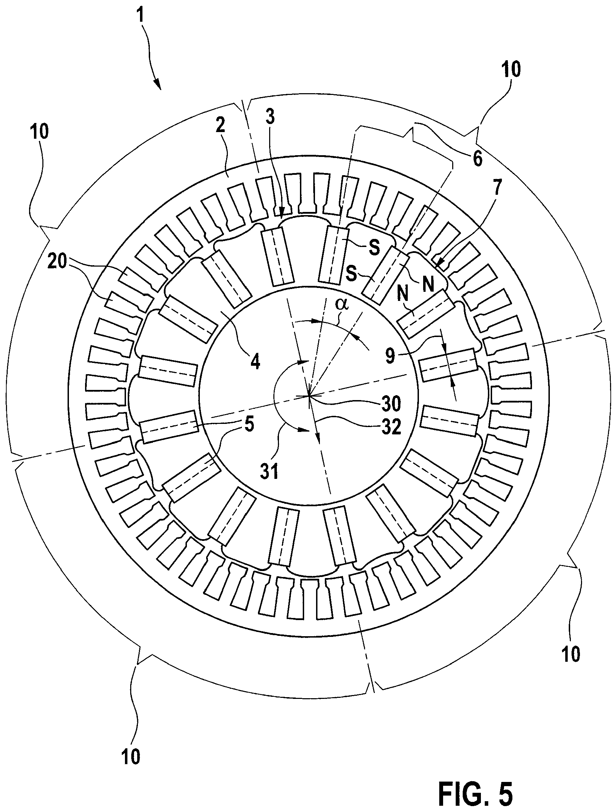

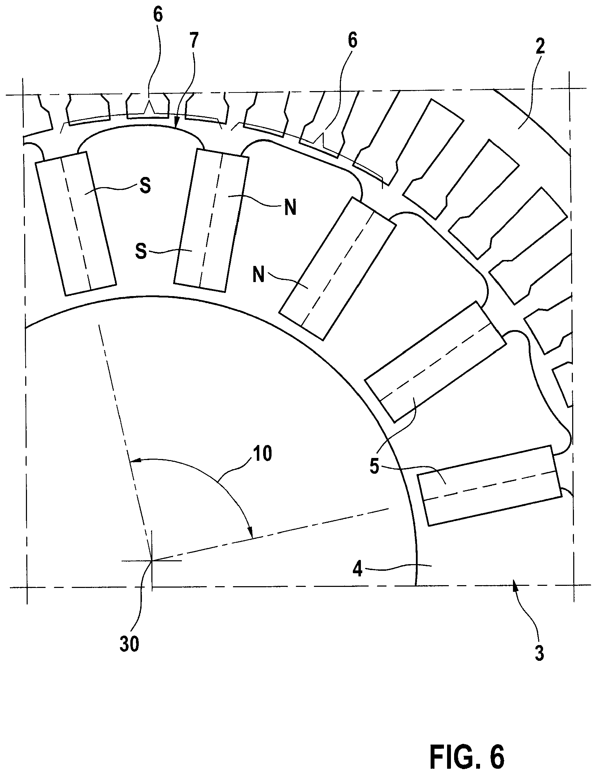

Im dritten Beispiel gemäß den Figuren 5 und 6 unterscheiden sich die Pole 6 der Polgruppe 10 in der geometrischen Ausgestaltung der Polaußenseite 7, insbesondere hinsichtlich des Trägers 4. So zeigt dieses Beispiel bei Betrachtung der Polgruppe 10 in Umfangsrichtung 31 im Uhrzeigersinn einen Pol 6 mit konvexer Polaußenseite 7, einen Pol 6 mit gerader Polaußenseite 7, einen weiteren Pol 6 mit gerader Polaußenseite 7, und einen Pol 6 mit konkaver Polaußenseite 7.

Die gezeigten Maßnahmen zur Ausgestaltung unterschiedlicher Pole 6 innerhalb einer Polgruppe 10 können miteinander kombiniert werden.

## Patentansprüche

1. Rotor (3) einer elektrischen Maschine (1) umfassend
• einen ferromagnetischen Träger (4), und
• eine Vielzahl an Magneten (5), die zur Drehachse (30) des Rotors (3) speichenförmig angeordnet sind, so dass die Magnetpole (N, S) der Magnete (5) in Umfangsrichtung (31) ausgerichtet sind und gleichgerichtete Magnetpole (N, S) einander zugewandt sind,
• wobei jeweils zwei einander zugewandte Magnetpole (N, S) und der dazwischenliegende Anteil des Trägers (4) einen Pol (6) des Rotors (3) bilden,
• wobei zumindest zwei Pole (6) eine Polgruppe (10) bilden, wobei sich die Polgruppe (10) in Umfangsrichtung (31) vollständig wiederholt, und
• wobei sich in der Polgruppe (10) zumindest zwei Pole (6) voneinander unterscheiden,
∘ wobei sich zumindest zwei Pole (6) in der Polgruppe (10) in ihrer Polbreite (α) voneinander unterscheiden, und
∘ wobei zumindest zwei Pole (6) in der Polgruppe (10) unterschiedliche Geometrien ihrer Polaußenseiten (7) aufweisen.

2. Rotor nach Anspruch 1, wobei innerhalb der Polgruppe (10) eine erste Polaußenseite (7) eines ersten Pols (6) konkav ausgebildet ist und eine zweite Polaußenseite (7) eines zweiten Pols (6) nicht-konkav oder mit einem größeren Radius als die erste Polaußenseite (7) konkav ausgebildet ist.

3. Rotor nach Anspruch 1 oder 2, wobei innerhalb der Polgruppe (10) eine erste Polaußenseite (7) eines ersten Pols (6) konvex ausgebildet ist und eine zweite Polaußenseite (7) eines zweiten Pols (6) nicht-konvex oder mit einem größeren Radius als die erste Polaußenseite (7) konvex ausgebildet ist.

4. Rotor nach einem der Ansprüche 1 bis 3, wobei sich zumindest zwei Pole (6) der Polgruppe (10) in der Überdeckung (11) der radialen Außenseite der Magnete (5) durch den Träger (4) unterscheiden.

5. Elektrische Maschine (1) umfassend einen Rotor (3) nach einem der vorhergehenden Ansprüche und einen Stator (2).

6. Elektrische Maschine nach Anspruch 5, wobei der Stator (2) eine Ganzlochwicklung aufweist.

7. Elektrische Maschine nach Anspruch 5 oder 6, wobei der Stator (2) eine Steckwicklung aufweist.

## Claims

1. Rotor (3) of an electrical machine (1), comprising
- a ferromagnetic carrier (4); and
- a multiplicity of magnets (5) which in relation to the rotation axis (30) of the rotor (3) are disposed in a spoke-shaped manner such that the magnetic poles (N, S) of the magnets (5) are oriented in the circumferential direction (31) and magnetic poles (N, S) of identical orientation face one another;
- wherein two mutually facing magnetic poles (N, S) and the intervening portion of the carrier (4) form in each case one pole (6) of the rotor (3);
- wherein at least two poles (6) form one pole group (10), wherein the pole group (10) is completely repeated in the circumferential direction (31); and
- wherein at least two poles (6) in the pole group (10) differ from one another;
- wherein at least two poles (6) in the pole group (10) in terms of the pole width (a) thereof differ from one another; and
- wherein at least two poles (6) in the pole group (10) in terms of the pole external sides (7) thereof have dissimilar geometries.

2. Rotor according to Claim 1, wherein within the pole group (10) a first pole external side (7) of a first pole (6) is configured so as to be concave, and a second pole external side (7) of a second pole (6) is configured so as to be non-concave or so as to be concave with a larger radius than the first pole external side (7).

3. Rotor according to Claim 1 or 2, wherein within the pole group (10) a first pole external side (7) of a first pole (6) is configured so as to be convex, and a second pole external side (7) of a second pole (6) is configured so as to be non-convex or so as to be convex with a larger radius than the first pole external side (7).

4. Rotor according to one of Claims 1 to 3, wherein at least two poles (6) of the pole group (10) differ in terms of the overlap (11) of the radial external side of the magnets (5) by the carrier (4).

5. Electrical machine (1) comprising a rotor (3) according to one of the preceding claims and a stator (2) .

6. Electrical machine according to Claim 5, wherein the stator (2) has an integral slot winding.

7. Electrical machine according to Claim 5 or 6, wherein the stator (2) has a plug winding.

## Revendications

1. Rotor (3) d'une machine électrique (1), comprenant
• un support ferromagnétique (4), et
• une pluralité d'aimants (5) disposés en forme de rayons par rapport à l'axe de rotation (30) du rotor (3) de sorte que les pôles magnétiques (N, S) des aimants (5) sont alignés dans la direction circonférentielle (31) et des pôles magnétiques parallèles (N, S) se font face,
• dans lequel respectivement deux pôles magnétiques (N, S) se faisant face et la partie du support (4) située entre ceux-ci forment un pôle (6) du rotor (3),
• dans lequel au moins deux pôles (6) forment un groupe de pôles (10), le groupe de pôles (10) se répétant entièrement dans la direction circonférentielle (31), et
• dans lequel, dans le groupe de pôles (10), au moins deux pôles (6) sont différents l'un de l'autre,
o au moins deux pôles (6) dans le groupe de pôles (10) se distinguant par leur largeur de pôle (α), et
∘ au moins deux pôles (6) dans le groupe de pôles (10) présentant des géométries différentes de leurs faces extérieures de pôle (7).

2. Rotor selon la revendication 1, dans lequel, à l'intérieur du groupe de pôles (10), une première face extérieure de pôle (7) d'un premier pôle (6) est réalisée de manière concave et une deuxième face extérieure de pôle (7) d'un deuxième pôle (6) est réalisée de manière non concave ou est réalisée de manière concave avec un rayon plus grand que la première face extérieure de pôle (7).

3. Rotor selon la revendication 1 ou 2, dans lequel, à l'intérieur du groupe de pôles (10), une première face extérieure de pôle (7) d'un premier pôle (6) est réalisée de manière convexe et une deuxième face extérieure de pôle (7) d'un deuxième pôle (6) est réalisée de manière non convexe ou est réalisée de manière convexe avec un rayon plus grand que la première face extérieure de pôle (7).

4. Rotor selon l'une quelconque des revendications 1 à 3, dans lequel au moins deux pôles (6) du groupe de pôles (10) se distinguent dans le recouvrement (11) de la face extérieure radiale des aimants (5) par le support (4).

5. Machine électrique (1), comprenant un rotor (3) selon l'une quelconque des revendications précédentes et un stator (2).

6. Machine électrique selon la revendication 5, dans laquelle le stator (2) présente un bobinage intégral.

7. Machine électrique selon la revendication 5 ou 6, dans laquelle le stator (2) présente un enroulement enfichable.
